# EUROPÄISCHE PATENTSCHRIFT

(11) **EP 4 112 825 B1**
(45) Veröffentlichungstag und Bekanntmachung des Hinweises auf die Patenterteilung: **05.06.2024**
(21) Anmeldenummer: 22181461.9
(22) Anmeldetag: 28.06.2022
(51) Int. Cl.: E03C 1/04, E03C 1/042, F16L 59/16

(54) **ANSCHLUSSSTÜCK ZUM ANSCHLUSS EINER WANDARMATUR**
CONNECTING PIECE FOR CONNECTING A WALL FITTING
PIÈCE DE RACCORDEMENT DESTINÉE AU RACCORDEMENT D'UNE ROBINETERIE MURALE

(30) Priorität: 01.07.2021 DE 202021103521 U
(43) Veröffentlichungstag der Anmeldung: 04.01.2023
(73) Patentinhaber: Gebr. Kemper GmbH + Co. KG, 57462 Olpe (DE)
(72) Erfinder: Fries, Stefan, 57462 Olpe (DE); Rübsamen, Jan, 57290 Neunkirchen (DE)
(74) Vertreter: Grünecker Patent- und Rechtsanwälte PartG mbB

(56) Entgegenhaltungen:
- EP-A1- 3 670 766
- DE-U- 7 109 925
- DE-U1-202012 012 816
- US-A1- 2013 081 730

## Beschreibung

Die vorliegende Erfindung betrifft ein Anschlussstück zum Anschluss einer Wandarmatur an einen Wandanschluss einer Wasserleitung gemäß dem Oberbegriff von Anspruch 1.

Ein solches Anschlussstück ist aus der EP 3 670 766 A1 bekannt.

Wandarmaturen sind in der Regel als Aufputzarmaturen ausgebildet. Für gewöhnlich werden die Anschlüsse einer Aufputzarmatur jeweils mit einem in einer Wand liegenden Anschluss (im Folgenden: Wandanschluss) einer Warmwasserleitung bzw. einer Kaltwasserleitung verbunden. Der Wandanschluss hat üblicherweise ein Innengewinde. Die Wasserleitungen, das Armaturengehäuse und die jeweiligen Anschlüsse sind in der Regel aus Metall. Metall hat bekanntermaßen eine relativ hohe Wärmeleitfähigkeit. Da die Wärmeleitstrecke zwischen der Warmwasserseite und der Kaltwasserseite vor der Wand meist im Wesentlichen durch das Armaturengehäuse gebildet ist, kann sich Wärme von der Warmwasserseite auf die Kaltwasserseite übertragen. Dies kann dazu führen, dass sich das Wasser auf der Kaltwasserseite, d.h. in den Kaltwasser-führenden Leitungen, auf eine kritische Temperatur von ca. 25°C oder höher erhöht, bei der die Bildung von Bakterien, wie Legionellen, begünstigt ist. Diese Problemstellung tritt vor allem dann auf, wenn eine Warmwasserzirkulationsleitung bis nahe an den Wandanschluss der Warmwasserleitung geführt ist. Denn durch die Zirkulation wird dafür gesorgt, dass das Warmwasser stets mit einer konstant hohen Temperatur, in der Regel nicht weniger als 55°C, an dem Wandanschluss der Warmwasserleitung anliegt.

Der Stand der Technik lässt noch Raum zur Verbesserung.

Eine Aufgabe der vorliegenden Erfindung ist es daher, ein Anschlussstück anzugeben, mit welchem sich die an Trinkwasser gestellten gesetzlichen Anforderungen erfüllen lassen und hygienisch unbedenkliches Wasser gezapft werden kann.

Zur Lösung dieser Aufgabenstellung gibt die vorliegende Erfindung ein Anschlussstück mit den Merkmalen von Anspruch 1 an. Das Anschlussstück zeichnet sich durch einen sich in Umfangsrichtung in Bezug auf eine axiale Erstreckung zumindest eines der Stutzen erstreckenden Umfangskanal, der mit der Einlassöffnung und der Auslassöffnung kommuniziert, aus. Der Umfangskanal bildet eine Kühlstrecke zur thermischen Schichtung von Wasser quer zur Einlassströmungsrichtung in den Einlassstutzen und quer zur Auslassströmungsrichtung aus dem Auslassstutzen. Durch die Kühlstrecke wird eine Wärmeströmung von der Einlassöffnung zur Auslassöffnung reduziert oder unterbunden, solange keine Druckdifferenz zwischen der Einlassöffnung und der Auslassöffnung durch einen Zapfvorgang an der Wandarmatur anliegt. In der Regel sinkt abgekühltes Wasser aufgrund der höheren Dichte gegenüber wärmerem Wasser in dem Umfangskanal nach unten.

Der Umfangskanal kann insbesondere so geformt sein, dass er sich ausschließlich in Umfangsrichtung erstreckt. Im Sinne der vorliegenden Erfindung entspricht die Richtung, in der sich der Umfangskanal erstreckt, derjenigen Richtung, in der das Wasser durch den Umfangskanal strömt. Selbstverständlich hat der Umfangskanal eine Ausdehnung, die quer zu seiner Erstreckungsrichtung ist und die einem Durchmesser des Umfangskanals entspricht. Dies erlaubt eine kompakte Bauweise des Anschlussstücks.

Die Einlassschnittstelle und die Auslassschnittstelle des Anschlussstücks sind für gewöhnlich jeweils durch ein metallisches Außengewinde gebildet. Die Einlassschnittstelle hat meist ein %2" Außengewinde. Die Auslassschnittstelle hat meist ein ¾" Außengewinde. Die Außengewinde sind üblicherweise ein vorteflonisiertes und durch Einschrauben in den Wandanschluss bzw. Verschrauben mit dem Stutzen des Armaturengehäuses dichtendes oder durch Einkammern eines Dichtrings dichtendes Gewinde. Vorzugsweise ist der Einlassstutzen zur Veränderung einer Einbaulage des Umfangskanals in dem Wandanschluss verschwenkbar.

Nach einer bevorzugten Weiterbildung der vorliegenden Erfindung sind der Einlassstutzen und der Auslassstutzen achsparallel zueinander ausgerichtet. Dabei sind die Längsachsen des Einlassstutzens und des Auslassstutzens parallel, d.h. sie liegen in einer Ebene und schneiden einander nicht. Dadurch kann die Wandarmatur in der herkömmlichen Ausrichtung an die Wand angeschlossen werden. Als herkömmliche Ausrichtung ist dabei zu verstehen, dass die Anschlüsse des Armaturengehäuses, die in der Regel als mit einer Überwurfmutter versehene rohrförmige Stutzen ausgebildet sind, einen im Wesentlichen rechten Winkel mit der Wand bilden.

Nach einer weiteren bevorzugten Weiterbildung der vorliegenden Erfindung ist das Anschlussstück als im Wesentlichen gerades Rohrstück ausgebildet. Im Gegensatz zu einem Schlauchstück ist es aus einem relativ steifen Material gebildet. Die Länge des Rohrstücks in axialer Richtung beträgt vorzugsweise zwischen 50 und 70 mm, weiter bevorzugt zwischen 55 mm und 65 mm und besonders bevorzugt ca. 60 mm. Die Breite des Rohrstücks in radial Richtung beträgt vorzugsweise zwischen 10 mm und 50 mm, weiter bevorzugt zwischen 20 mm und 40 mm, zwischen 25 mm und 35 mm oder zwischen 28 mm und 32 mm und besonders bevorzugt ca. 31 mm. Das Verhältnis von axialer Länge zu radialer Breite beträgt vorzugsweise zwischen 7 und 1, weiter bevorzugt zwischen 5 und 1,5 oder zwischen 3 und 1,5 und besonders bevorzugt ca. 2,0.

Nach einer weiteren bevorzugten Weiterbildung der vorliegenden Erfindung ist eine Wandung des Umfangskanals durch Material geringer Wärmeleitfähigkeit gebildet. Das Material geringer Wärmeleitfähigkeit kann insbesondere ein für Trinkwasser zugelassener Kunststoff sein. Dadurch wird ein Wärmetransport zwischen dem Einlassstutzen und dem Auslassstutzen durch Wärmeleitung unterbunden und der Wärmetransport von der Einlassseite zur Auslassseite wird für den Zeitraum, in dem kein Wasser an der Wandarmatur gezapft wird, weiter verringert.

Erfindungsgemäß ist der Einlassstutzen mit einem ersten Rohreinsatz und der Auslassstutzen mit einem zweiten Rohreinsatz verbunden, wobei der erste Rohreinsatz innerhalb des Einlassstutzens und der zweite Rohreinsatz innerhalb des Auslassstutzens angeordnet sind und die Rohreinsätze den Strömungsweg durch das Anschlussstück ausbilden. Insbesondere kann der erste und der zweite Rohreinsatz jeweils an einem freien Ende die Einlass- bzw. die Auslassöffnung ausbilden. In der Regel sind die Rohreinsätze dichtend in den jeweiligen Stutzen aufgenommen. Üblicherweise sind die Rohreinsätze in dem jeweiligen Stutzen mit jeweils einem Sprengring oder dergleichen gesichert.

Weiter bevorzugt weist der erste Rohreinsatz an einem der Einlassöffnung gegenüberliegenden freien Ende einen ersten Flansch und der zweite Rohreinsatz an einem der Auslassöffnung gegenüberliegenden Ende einen zweiten Flansch auf, wobei der erste und der zweite Flansch durch dichtende Anlage gegeneinander zwischen sich den Umfangskanal bilden. Dabei kann der Umfangskanal eine an einem freien Ende einer der Rohreinsätze vorgesehene, zu dem freien Ende hin offene und sich in Umfangsrichtung erstreckende Nut umfassen, die durch die dichtende Anlage des freien Endes des anderen Rohreinsatzes gegeneinander einen Kanal bildet. Es können auch beide Rohreinsätze mindestens eine solche Nut aufweisen, wobei die Nuten zusammen den Umfangskanal bilden. Die Nut bzw. die Nute sind in der Regel als Aussparung in einer ansonsten ebenen Anlagefläche vorgesehen.

Weiter bevorzugt sind der erste Flansch und der zweite Flansch kraftschlüssig, stoffschlüssig oder formschlüssig miteinander verbunden. Die Flansche können beispielsweise mehrere umfänglich beabstandete sich gegenüberliegende Verbindungsabschnitte zum Einsetzen einer Schraube bzw. einer Mutter aufweisen. Durch Verschrauben von Schraube und Mutter werden dann die Flansche kraftschlüssig miteinander verbunden. Alternativ können die Flansche beispielsweise durch Verkleben stoffschlüssig miteinander verbunden werden. Weiter alternativ können an den Flanschen männliche und/oder weibliche Rastmittel zur formschlüssigen Verbindung vorgesehen sein. Die Flansche können auch durch eine Kombination aus einer kraftschlüssigen und/oder stoffschlüssigen und/oder formschlüssigen Verbindung miteinander verbunden sein.

Nach einer weiteren bevorzugten Weiterbildung der vorliegenden Erfindung sind der erste und der zweite Flansch zur Veränderung einer Einbaulage des Umfangskanals gegenüber dem Einlassstutzen und dem Auslassstutzen schwenkbar. D.h. der erste und der zweite Flansch können vorzugsweise selbst ohne Verdrehen des Einlassstutzens in dem Wandanschluss veschwenkt werden und damit die Einbaulage des Umfangskanals auch nach der Montage der Wandarmatur noch verändert werden. Nach einer alternativen bevorzugten Weiterbildung der vorliegenden Erfindung sind die Rohreinsätze mit den Flanschen drehfest mit dem Einlassstutzen und dem Auslassstutzen verbunden, wobei der Einlassstutzen zur Veränderung einer Einbaulage des Umfangskanals in dem Wandanschluss schwenkbar ist.

Nach einer weiteren bevorzugten Weiterbildung der vorliegenden Erfindung sind die Rohreinsätze Kunststoffteile. Vorzugsweise bilden die Rohreinsätze den jeweiligen Flansch einteilig aus.

Nach einer weiteren bevorzugten Weiterbildung der vorliegenden Erfindung ist der Umfangskanal in einer Querschnittansicht des Anschlussstücks als eine sternförmige Bahn ausgebildet. Weiter bevorzugt ist der Umfangskanal als umfänglich geschlossener Kanal ausgebildet. D.h. der Umfangskanal erstreckt sich in der Querschnittansicht vorzugsweise über 360° bzw. ist vorzugsweise eine in der Querschnittansicht geschlossene Bahn. Dadurch wird eine möglichst lange Kühlstrecke geschaffen.

Nach einer weiteren bevorzugten Weiterbildung der vorliegenden Erfindung bilden der Einlassstutzen und der Auslassstutzen jeweils ein Außengewinde als Einlassschnittstelle bzw. als Auslassschnittstelle aus. Weiter bevorzugt sind der Einlassstutzen und der Auslassstutzen aus Metall, insbesondere Messing oder Rotguss, oder Edelstahl.

Nach einer weiteren bevorzugten Weiterbildung der vorliegenden Erfindung liegen sich eine einlassseitige Öffnung des Umfangskanals und eine auslassseitige Öffnung des Umfangskanals in einer Querschnittansicht des Anschlussstücks direkt gegenüber, insbesondere um 180° gegenüberliegen. Dabei befinden sich die einlassseitige Öffnung die auslassseitige Öffnung in Bezug auf eine Mittellängsachse des Anschlussstücks einander gegenüberliegend. Nach der Montage liegt die einlassseitige Öffnung üblicherweise an der höchsten Stelle im Schwerefeld der Erde wohingegen die auslassseitige Öffnung an der tiefsten Stelle liegt.

In einem nebengeordneten Aspekt gibt die vorliegende Erfindung ein Anschlussset umfassend eine Wandarmatur mit einer Warmwasser-Armaturenschnittstelle und einer Kaltwasser-Armaturenschnittstelle und zumindest einem erfindungsgemäßen Anschlussstück an. Die Wandarmatur ist üblicherweise als Aufputzarmatur ausgebildet. Vorzugsweise wird zumindest die Warmwasser-Armaturenschnittstelle durch das Anschlussstück an den Wandanschluss einer Warmwasserleitung angeschlossen, um eine Wärmeströmung von der Warmwasserseite auf die Kaltwasserseite während der Zeit eines Ausbleibens eines Zapfvorgangs zu unterbinden. Die Kaltwasser-Armaturenschnittstelle kann durch eine Hahnverlängerung, einen sogenannten S-Anschluss oder ein weiteres Anschlussstück an den Wandanschluss einer Kaltwasserleitung angeschlossen werden.

In einem weiteren nebengeordneten Aspekt gibt die vorliegende Erfindung eine Trink- und Brauchwasserinstallation mit einer einen Wandanschluss aufweisenden Wasserleitung, einer Wandarmatur mit einem Anschluss, der mit dem Wandanschluss kommuniziert, und einem den Anschluss der Wandarmatur mit dem Wandanschluss verbindenden erfindungsgemäßen Anschlussstück an. Vorzugsweise ist die einlassseitige Öffnung des Umfangskanals direkt über der auslassseitigen Öffnung des Umfangskanals angeordnet.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine Seitenansicht eines Anschlussstücks;
- Fig. 2: eine Längsschnittansicht des Anschlussstücks; und
- Fig. 3: eine Querschnittansicht gemäß I - I in Fig. 2.

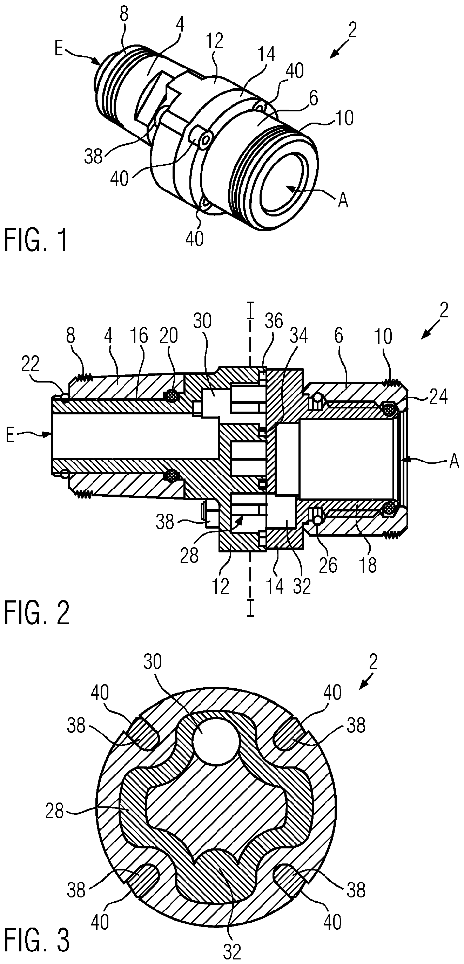

Die Figur 1 zeigt ein Ausführungsbeispiel eines Anschlussstücks 2, das als im Wesentlichen gerades Rohrstück mit einer Einlassöffnung E und einer der Einlassöffnung E gegenüberliegenden Auslassöffnung A ausgebildet ist. An der Einlassöffnung E ist ein Einlassstutzen 4 und an der Auslassöffnung A ist ein Auslassstutzen 6 vorgesehen, wobei der Einlassstutzen 4 eine Einlassschnittstelle 8 und der Auslassstutzen 6 eine Auslassschnittstelle 10 ausbilden. Die Einlassschnittstelle 8 ist durch ein Außengewinde zur fluiddichten Verbindung mit einem Innengewinde eines Wandanschlusses einer Wasserleitung gebildet. Die Auslassschnittstelle 10 ist durch ein Außengewinde zur fluiddichten Verbindung mit einem Armaturenanschluss einer Wandarmatur gebildet. Der Einlassstutzen 4 und der Auslassstutzen 6 können aus einer Kupferlegierung, insbesondere Rotguss, hergestellt sein.

Der Einlassstutzen 4 und der Auslassstutzen 6 sind separate Bauteile, zwischen denen zwei Flansche 12, 14 vorgesehen sind, die aneinander anliegen und jeweils von einem Rohreinsatz 16, 18 einteilig ausgebildet sind, der in den Einlassstutzen 4 bzw. den Auslassstutzen 6 eingesetzt ist (siehe Fig. 2).

Der in dem Einlassstutzen 4 vorgesehene erste Rohreinsatz 16 bildet die Einlassöffnung E aus. Der erste Rohreinsatz 16 ist durch einen O-Ring 20 gegenüber dem Einlassstutzen 4 abgedichtet und durch einen Sprengring 22 gegen eine axiale Verschiebung in Richtung des Auslassstutzens 6 gesichert. Der in dem Auslassstutzen 6 vorgesehene zweite Rohreinsatz 18 bildet die Auslassöffnung A aus. Der zweite Rohreinsatz 18 ist durch einen O-Ring 24 gegenüber dem Auslassstutzen 6 abgedichtet und durch einen Sprengring 26 gegen eine axiale Verschiebung in Richtung des Einlassstutzens 4 gesichert. Der Strömungsweg durch das Anschlussstück 2 wird vollständig durch den ersten und den zweiten Rohreinsatz 16, 18 gebildet, die aus einem Material geringer Wärmeleitfähigkeit hergestellt sind und insbesondere aus einem für Trinkwasser zugelassenen Kunststoff hergestellt sein können.

Wie insbesondere Figur 2 zeigt, sind der Einlassstutzen 4 und der Auslassstutzen 6 achsparallel, wobei die Symmetrieachsen der Stutzen 4, 6 leicht versetzt zueinander, d.h. echt parallel, sind.

In Umfangsrichtung in Bezug auf die axiale Erstreckung der Stutzen 4, 6 erstreckt sich ein Umfangskanal 28 (siehe Figur 3), der durch eine einlassseitige Öffnung 30 mit der Einlassöffnung E und durch eine auslassseitige Öffnung 32 mit der Auslassöffnung A kommuniziert. Der Umfangskanal 28 ist durch eine sich in Umfangsrichtung erstreckende Nut am flanschseitigen freien Ende des ersten Rohreinsatzes 16 gebildet, die durch eine ebene Fläche oder durch ebene Flächenabschnitte an dem flanschseitigen freien Ende des zweiten Rohreinsatzes 18 zu einem Umfangskanal 28 geschlossen ist. Nach radial innen ist der Umfangskanal 28 durch ein radial inneres Dichtelement 34 und nach radial außen ist der Umfangskanal 28 durch ein radial äußeres Dichtelement 36 abgedichtet.

Die Rohreinsätze 16, 18 pressen die radialen Dichtelemente 34, 36 zwischen sich elastisch ein. Hierfür sind der erste Rohreinsatz 16 und der zweite Rohreinsatz 18 durch Schrauben 38 und Muttern 40 kraftschlüssig miteinander verbunden (s. Fig. 1).

In der in Figur 3 gezeigten Querschnittansicht bildet der Umfangskanal 28 eine sternförmige geschlossene Bahn. Die Bahn ist an den Verbindungsabschnitten für die Schrauben 38 und die Muttern 40 konkav. Die einlassseitige Öffnung 30 des Umfangskanals 28 und die auslassseitige Öffnung 32 des Umfangskanals 28 liegen sich in der Querschnittansicht um 180° gegenüber.

### Bezugszeichenliste

- 2: Anschlussstück
- 4: Einlassstutzen
- 6: Auslassstutzen
- 8: Einlassschnittstelle
- 10: Auslassschnittstelle
- 12: erster Flansch
- 14: zweiter Flansch
- 16: erster Rohreinsatz
- 18: zweiter Rohreinsatz
- 20: O-Ring
- 22: Sprengring
- 24: O-Ring
- 26: Sprengring
- 28: Umfangskanal
- 30: einlassseitige Öffnung
- 32: auslassseitige Öffnung
- 34: radial inneres Dichtelement
- 36: radial äußeres Dichtelement
- 38: Schraube
- 40: Mutter
- E: Einlassöffnung
- A: Auslassöffnung

## Patentansprüche

1. Anschlussstück (2) zum Anschluss einer Wandarmatur an einen Wandanschluss einer Wasserleitung, aufweisend eine Einlassöffnung (E), eine Auslassöffnung (A) und einen dazwischen ausgebildeten Strömungsweg durch das Anschlussstück (2), einen Einlassstutzen (4) an der Einlassöffnung (E) mit einer Einlassschnittstelle (8) zur fluiddichten Verbindung mit dem Wandanschluss, einen Auslassstutzen (6) an der Auslassöffnung (A) mit einer Auslassschnittstelle (10) zur fluiddichten Verbindung mit der Wandarmatur, und
einen sich in Umfangsrichtung in Bezug auf eine axiale Erstreckung zumindest eines der Stutzen (4, 6) erstreckenden Umfangskanal (28), der mit der Einlassöffnung (E) und der Auslassöffnung (A) kommuniziert, **dadurch gekennzeichnet, dass** der Einlassstutzen (4) mit einem ersten Rohreinsatz (16) und der Auslassstutzen (6) mit einem zweiten Rohreinsatz (18) verbunden ist, wobei der erste Rohreinsatz (16) innerhalb des Einlassstutzens (4) und der zweite Rohreinsatz (18) innerhalb des Auslassstutzens (6) angeordnet ist und die Rohreinsätze (16, 18) den Strömungsweg durch das Anschlussstück (2) ausbilden.

2. Anschlussstück (2) nach Anspruch 1, **dadurch gekennzeichnet, dass** der Einlassstutzen (4) und der Auslassstutzen (6) achsparallel zueinander ausgerichtet sind.

3. Anschlussstück (2) nach Anspruch 1 oder 2, **dadurch gekennzeichnet, dass** das Anschlussstück (2) als im Wesentlichen gerades Rohrstück ausgebildet ist.

4. Anschlussstück (2) nach einem der Ansprüche 1 bis 3, **dadurch gekennzeichnet, dass** eine Wandung des Umfangskanals (28) durch einen für Trinkwasser zugelassenen Kunststoff gebildet ist.

5. Anschlussstück (2) nach Anspruch 1, **dadurch gekennzeichnet, dass** der erste Rohreinsatz (16) einen ersten Flansch (12) aufweist, und der zweite Rohreinsatz (18) einen zweiten Flansch (14) aufweist, wobei der erste und der zweite Flansch (12, 14) durch dichtende Anlage gegeneinander zwischen sich den Umfangskanal (28) bilden.

6. Anschlussstück (2) nach Anspruch 5, **dadurch gekennzeichnet, dass** der erste Flansch (12) und der zweite Flansch (14) kraftschlüssig, stoffschlüssig oder formschlüssig miteinander verbunden sind.

7. Anschlussstück (2) nach Anspruch 5 oder 6, **dadurch gekennzeichnet, dass** der erste und der zweite Flansch (12, 14) zur Veränderung einer Einbaulage des Umfangskanals (28) gegenüber dem Einlassstutzen (4) und dem Auslassstutzen (8) schwenkbar sind.

8. Anschlussstück (2) nach einem der Ansprüche 5 bis 7, **dadurch gekennzeichnet, dass** die Rohreinsätze (16, 18) Kunststoffteile sind, die vorzugsweise den jeweiligen Flansch (12, 14) einteilig ausbilden.

9. Anschlussstück (2) nach einem der vorherigen Ansprüche, **dadurch gekennzeichnet, dass** der Umfangskanal (28) in einer Querschnittansicht des Anschlussstücks (2) als eine sternförmige Bahn ausgebildet ist.

10. Anschlussstück (2) nach einem der vorherigen Ansprüche, **dadurch gekennzeichnet, dass** der Umfangskanal (28) als umfänglich geschlossener Kanal ausgebildet ist.

11. Anschlussstück (2) nach einem der vorherigen Ansprüche, **dadurch gekennzeichnet, dass** der Einlassstutzen (4) und der Auslassstutzen (6) jeweils ein Außengewinde als Einlassschnittstelle (8) bzw. als Auslassschnittstelle (10) ausbilden und bevorzugt aus Metall, insbesondere Messing oder Rotguss oder Edelstahl sind.

12. Anschlussstück (2) nach einem der vorherigen Ansprüche, **dadurch gekennzeichnet, dass** sich eine einlassseitige Öffnung (30) des Umfangskanals (28) und eine auslassseitige Öffnung (32) des Umfangskanals (28) in einer Querschnittansicht des Anschlussstücks (2) gegenüberliegen.

13. Anschlussset umfassend eine Wandarmatur mit einer Warmwasser-Armaturenschnittstelle und einer Kaltwasser-Armaturenschnittstelle und zumindest ein Anschlussstück (2) nach einem der vorherigen Ansprüche.

14. Trink- und Brauchwasserinstallation mit einer einen Wandanschluss aufweisenden Wasserleitung, einer Wandarmatur mit einem Anschluss, der mit dem Wandanschluss kommuniziert, und einem den Anschluss der Wandarmatur mit dem Wandanschluss verbindenden Anschlussstück (2) nach einem der vorherigen Ansprüche, insbesondere nach Anspruch 12, wobei vorzugsweise die einlassseitige Öffnung (30) des Umfangskanals (28) direkt über der auslassseitigen Öffnung (32) des Umfangskanals (28) angeordnet ist.

## Claims

1. Connecting piece (2) for connecting a wall mounted tap to a wall outlet of a water line, including an inlet opening (E), an outlet opening (A) and a flow path formed therebetween through the connecting piece (2), an inlet connection (4) at the inlet opening (E) with an inlet interface (8) for fluid-tight connection to the wall outlet, an outlet connection (6) at the outlet opening (A) with an outlet interface (10) for fluid-tight connection to the wall mounted tap, and
a circumferential channel (28) extending in the circumferential direction with respect to an axial extension of at least one of the connections (4, 6) which communicates with the inlet opening (E) and the outlet opening (A), **characterized in that** the inlet connection (4) is connected to a first pipe insert (16) and the outlet connection (6) is connected to a second pipe insert (18), wherein the first pipe insert (16) is arranged within the inlet connection (4) and the second pipe insert (18) is arranged within the outlet connection (6) and the pipe inserts (16, 18) form the flow path through the connecting piece (2).

2. Connecting piece (2) according to claim 1, **characterized in that** the inlet connection (4) and the outlet connection (6) are aligned axially parallel to each other.

3. Connecting piece (2) according to claims 1 or 2, **characterized in that** the connecting piece (2) is configured as an essentially straight pipe section.

4. Connecting piece (2) according to any one of claims 1 to 3, **characterized in that** a wall of the circumferential channel (28) is made of a plastic approved for drinking water.

5. Connecting piece (2) according to claim 1, **characterized in that** the first pipe insert (16) includes a first flange (12) and the second pipe insert (18) includes a second flange (14), the first and second flanges (12, 14) forming the circumferential channel (28) therebetween by sealingly abutting against each other.

6. Connecting piece (2) according to claim 5, **characterized in that** the first flange (12) and the second flange (14) are connected to each other by friction joint, closure by adhesive force or positive joint.

7. Connecting piece (2) according to claims 5 or 6, **characterized in that** the first and second flanges (12, 14) can be pivoted relative to the inlet connection (4) and the outlet connection (8) in order to change the mounting position of the circumferential channel (28).

8. Connecting piece (2) according to any one of claims 5 to 7, **characterized in that** the pipe inserts (16, 18) are plastic parts which preferably form the respective flange (12, 14) in an integral manner.

9. Connecting piece (2) according to any one of the preceding claims, **characterized in that** in a cross-sectional view of the connecting piece (2) the circumferential channel (28) is configured as a star-shaped path.

10. Connecting piece (2) according to any one of the preceding claims, **characterized in that** the circumferential channel (28) is configured as a circumferentially closed channel.

11. Connecting piece (2) according to any one of the preceding claims, **characterized in that** the inlet connection (4) and the outlet connection (6) each define an external thread as inlet interface (8) and outlet interface (10), respectively, and are preferably made of metal, in particular brass or red brass or stainless steel.

12. Connecting piece (2) according to any one of the preceding claims, **characterized in that** an inlet-side opening (30) of the circumferential channel (28) and an outlet-side opening (32) of the circumferential channel (28) oppose each other in a cross-sectional view of the connecting piece (2).

13. Connection kit comprising a wall mounted tap with a hot water fitting interface and a cold water fitting interface and at least one connecting piece (2) according to any one of the preceding claims.

14. Installation for drinking and service water comprising a water pipe including a wall outlet, a wall mounted tap having a connection communicating with the wall outlet, and a connecting piece (2) connecting the connection of the wall outlet to the wall mounted tap according to any one of the preceding claims, in particular according to claim 12, wherein preferably the inlet-side opening (30) of the circumferential channel (28) is arranged directly above the outlet-side opening (32) of the circumferential channel (28).

## Revendications

1. Pièce de raccordement (2) permettant de raccorder une robinetterie murale à un raccordement mural d'une conduite d'eau, comprenant un orifice d'entrée (E), un orifice de sortie (A) et un trajet d'écoulement formé entre lesdits orifices à travers la pièce de raccordement (2), une tubulure d'entrée (4) au niveau de l'orifice d'entrée (E) avec une interface d'entrée (8) permettant une connexion étanche aux fluides avec le raccordement mural, une tubulure de sortie (6) au niveau de l'orifice de sortie (A) avec une interface de sortie (10) permettant une connexion étanche aux fluides avec la robinetterie murale, et
un canal périphérique (28) s'étendant dans la direction circonférentielle par rapport à une extension axiale d'au moins une des tubulures (4, 6) et communiquant avec l'orifice d'entrée (E) et l'orifice de sortie (A), **caractérisée en ce que** la tubulure d'entrée (4) est reliée à un premier insert tubulaire (16) et la tubulure de sortie (6) est reliée à un second insert tubulaire (18), dans laquelle le premier insert tubulaire (16) est agencé à l'intérieur de la tubulure d'entrée (4) et le second insert tubulaire (18) est agencé à l'intérieur de la tubulure de sortie (6) et les inserts tubulaires (16, 18) forment le trajet d'écoulement à travers la pièce de raccordement (2).

2. Pièce de raccordement (2) selon la revendication 1, **caractérisée en ce que** la tubulure d'entrée (4) et la tubulure de sortie (6) ont leurs axes orientés parallèlement l'un à l'autre.

3. Pièce de raccordement (2) selon la revendication 1 ou 2, **caractérisée en ce que** la pièce de raccordement (2) est réalisée sous la forme d'une pièce tubulaire essentiellement droite.

4. Pièce de raccordement (2) selon l'une quelconque des revendications 1 à 3, **caractérisée en ce qu'**une paroi du canal périphérique (28) est constituée d'une matière plastique autorisée pour l'eau potable.

5. Pièce de raccordement (2) selon la revendication 1, **caractérisée en ce que** le premier insert tubulaire (16) présente une première bride (12) et le second insert tubulaire (18) présente une seconde bride (14), dans laquelle les première et seconde brides (12, 14) forment entre elles le canal périphérique (28) en s'appuyant de manière étanche l'une contre l'autre.

6. Pièce de raccordement (2) selon la revendication 5, **caractérisée en ce que** la première bride (12) et la seconde bride (14) sont reliées l'une à l'autre par complémentarité de force, de matière ou de forme.

7. Pièce de raccordement (2) selon la revendication 5 ou 6, **caractérisée en ce que** les première et seconde brides (12, 14) peuvent pivoter par rapport à la tubulure d'entrée (4) et à la tubulure de sortie (8) afin de modifier la position d'installation du canal périphérique (28).

8. Pièce de raccordement (2) selon l'une quelconque des revendications 5 à 7, **caractérisée en ce que** les inserts tubulaires (16, 18) sont des pièces en plastique qui forment de manière préférée d'un seul tenant la bride (12, 14) respective.

9. Pièce de raccordement (2) selon l'une quelconque des revendications précédentes, **caractérisée en ce que** le canal périphérique (28) est réalisé sous la forme d'un chemin en étoile selon une vue en coupe transversale de la pièce de raccordement (2).

10. Pièce de raccordement (2) selon l'une quelconque des revendications précédentes, **caractérisée en ce que** le canal périphérique (28) est réalisé sous la forme d'un canal circonférentiellement fermé.

11. Pièce de raccordement (2) selon l'une quelconque des revendications précédentes, **caractérisée en ce que** la tubulure d'entrée (4) et la tubulure de sortie (6) forment respectivement un filetage extérieur faisant office d'interface d'entrée (8) ou d'interface de sortie (10) et sont de manière préférée en métal, en particulier en laiton ou en bronze ou en acier inoxydable.

12. Pièce de raccordement (2) selon l'une quelconque des revendications précédentes, **caractérisée en ce qu'**un orifice côté entrée (30) du canal périphérique (28) et un orifice côté sortie (32) du canal périphérique (28) se font face selon une vue en coupe transversale de la pièce de raccordement (2).

13. Ensemble de raccordement comprenant une robinetterie murale avec une interface de robinetterie d'eau chaude et une interface de robinetterie d'eau froide et au moins une pièce de raccordement (2) selon l'une quelconque des revendications précédentes.

14. Installation d'eau potable et industrielle comprenant une conduite d'eau présentant un raccordement mural, une robinetterie murale avec un raccordement qui communique avec le raccordement mural, et une pièce de raccordement (2) selon l'une quelconque des revendications précédentes, en particulier selon la revendication 12, reliant le raccordement de la robinetterie murale au raccordement mural, dans laquelle de manière préférée l'orifice côté entrée (30) du canal périphérique (28) est agencé directement au-dessus de l'orifice côté sortie (32) du canal périphérique (28).
